# FASCICULE DE BREVET EUROPEEN

(11) **EP 4 204 261 B1**
(45) Date de publication et mention de la délivrance du brevet: **26.08.2026**
(21) Numéro de dépôt: 21746513.7
(22) Date de dépôt: 05.07.2021
(51) Int. Cl.: B60R 25/20

(54) **PROCÉDÉ ET DISPOSITIF DE SÉLECTION D'UN PROFIL UTILISATEUR**
VERFAHREN UND VORRICHTUNG ZUR AUSWAHL EINES BENUTZERPROFILS
METHOD AND DEVICE FOR SELECTING A USER PROFILE

(30) Priorité: 26.08.2020 FR 2008694
(43) Date de publication de la demande: 05.07.2023
(73) Titulaire: Stellantis Auto SAS, 78300 Poissy (FR)
(72) Inventeur: POGNON, Laurent, 78280 GUYANCOURT (FR); BECKER, Jonathan, 78450 VILLEPREUX (FR)
(74) Mandataire: ESIP
(86) Numéro de dépôt international: PCT/FR2021/051233
(87) Numéro de publication internationale: WO 2022/043624

(56) Documents cités:
- US-A1- 2010 308 986
- US-A1- 2011 080 278
- US-A1- 2017 200 336
- US-A1- 2019 266 582
- US-B1- 10 373 523

## Description

La présente invention revendique la priorité de la demande française 2008694 déposée le 26.08.2020.

### Domaine technique

L'invention concerne un procédé et un dispositif de sélection d'un profil utilisateur pour véhicule, notamment automobile.

### Arrière-plan technologique

Le document US 2019/266582 divulgue un procédé de sélection d'un profil utilisateur pour un véhicule, ledit procédé étant mis en œuvre par ledit véhicule, ledit procédé comprenant les étapes suivantes :
- en réponse à un signal de réveil, - reconnaissance d'un utilisateur et sélection d'un profil associé,
- affichage d'une page d'accueil comportant une pluralité de profils.

Les véhicules contemporains, ou pour le moins certains d'entre eux, embarquent des équipements ou systèmes dont les réglages sont personnalisables en fonction des utilisateurs de ces équipements ou systèmes. A titre d'exemple, il est possible de régler le positionnement des sièges du véhicule, par exemple le siège conducteur, et d'enregistrer le réglage en fonction de l'utilisateur. Les paramètres de réglage tels que par exemple la distance au volant, la hauteur peuvent être enregistrés dans différentes mémoires numérotées. Un utilisateur entrant dans le véhicule peut alors sélectionner une des mémoires pour que le siège se règle selon les paramètres qu'il a sélectionnés et mémorisés. Selon un autre exemple, le système multimédia d'un véhicule peut également être personnalisé, chaque utilisateur ayant la possibilité de créer un profil utilisateur dans lequel il enregistre ses préférences, par exemple la liste des stations radios préférées, la couleur de l'arrière-plan de l'écran du système multimédia, le volume sonore et tant d'autres.

Pour sélectionner un profil utilisateur enregistré, l'utilisateur doit effectuer une ou plusieurs actions (par exemple sélection d'un profil dans un menu par appui tactile, sélection d'un bouton de mémoire préprogrammé). Ces sélections, souvent manuelles, sont peu conviviales et peuvent s'avérer dangereuses lorsque le véhicule est en déplacement.

### Résumé de l'invention

Un objet de la présente invention est d'améliorer la sélection d'un profil utilisateur dans un véhicule.

Un autre objet de la présente invention est d'améliorer la convivialité des systèmes interactifs embarqués dans un véhicule et la sécurité du véhicule et de ses passagers de manière générale.

L'invention concerne un procédé de sélection d'un profil utilisateur pour véhicule (10), ledit procédé étant mis en oeuvre par ledit véhicule (10), ledit procédé comprenant les étapes de :
En réponse à un signal de réveil,
- Reconnaissance (31) d'un utilisateur et sélection (32) d'un profil associé,
- affichage (33) d'une page d'accueil sur un écran du véhicule, ladite page d'accueil comportant une pluralité de profils,
- affichage (34) d'une indication signalant un profil associé à l'utilisateur reconnu ou un profil dernièrement utilisé si l'étape de reconnaissance a échoué, en réponse à un signal prédéterminé , chargement (35) du profil signalé sur l'écran d'accueil.

Grâce au procédé selon l'invention, un profil est chargé sans que l'utilisateur ait besoin d'effectué une action spécifique.

Selon l'invention le signal prédéterminé est choisi parmi : un signal de démarrage du véhicule, un signal d'activation d'une pédale accélération, un signal déblocage d'un frein de parking automatique ou de déblocage d'un frein à main manuel, ou un signal indiquant la fin d'un temporisateur.

Avantageusement, l'étape de reconnaissance (31) d'un utilisateur comprend la détection d'un objet connecté (11).

Avantageusement, ladite détection de l'objet connecté (11) comprend une connexion dudit objet connecté audit véhicule (10) via une connexion sans fil. Avantageusement, ladite connexion sans fil est une connexion Bluetooth. Avantageusement, le procédé selon l'invention comprend en outre une étape d'association dudit objet connecté (11) audit profil utilisateur.

Avantageusement, le procédé selon l'invention comprend en outre une étape de réglage d'au moins un équipement dudit véhicule (10) en fonction dudit profil.

L'invention concerne aussi un dispositif (2) de sélection d'un profil utilisateur pour véhicule, ledit dispositif (2) comprenant une mémoire (21) associée à au moins un processeur (20) configuré pour la mise en œuvre des étapes du procédé selon l'invention.

L'invention concerne aussi un véhicule (10) comprenant le dispositif (2) selon l'invention.

L'invention concerne aussi un produit programme d'ordinateur comportant des instructions adaptées pour l'exécution des étapes du procédé selon l'invention, lorsque le programme d'ordinateur est exécuté par au moins un processeur.

### Brève description des figures

D'autres caractéristiques et avantages de l'invention ressortiront de la description des modes de réalisation non limitatifs de l'invention ci-après, en référence aux figures annexées, sur lesquelles :
[Fig. 1] illustre schématiquement un objet connecté relié par une liaison sans fil à un véhicule, selon un exemple de réalisation particulier et non limitatif de la présente invention;
[Fig. 2] illustre schématiquement un dispositif configuré pour sélectionner un profil utilisateur pour un véhicule, selon un exemple de réalisation particulier et non limitatif de la présente invention;
[Fig. 3] illustre un organigramme des différentes étapes d'un procédé de sélection d'un profil utilisateur pour véhicule, selon un exemple de réalisation particulier et non limitatif de la présente invention.
[Fig. 4] illustre un exemple de page d'accueil selon un exemple de réalisation particulier et non limitatif de la présente invention.

### Description des modes de réalisation

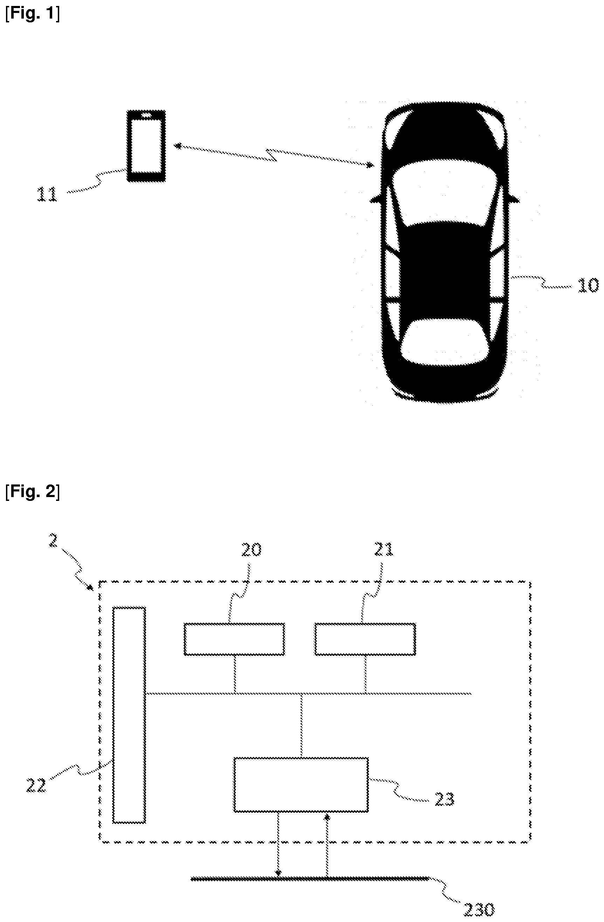

Un procédé et un dispositif de sélection d'un profil utilisateur vont maintenant être décrits dans ce qui va suivre en référence conjointement aux figures 1 à 3. Des mêmes éléments sont identifiés avec des mêmes signes de référence tout au long de la description qui va suivre.

Selon un exemple particulier et non limitatif de réalisation de l'invention, un procédé de sélection d'un profil utilisateur comprend en réponse à la réception d'un signal de réveil par une unité de calcul d'un véhicule (par exemple un véhicule automobile ou un camion) la reconnaissance par le véhicule d'un utilisateur (par exemple au moyen d'un objet connecté (aussi appelé dispositif intelligent, de l'anglais « smart device »), porté par la conductrice ou le conducteur du véhicule. La détection se fait par exemple au travers de l'établissement d'une connexion sans fil entre l'objet connecté et le véhicule, par une connexion de type Wifi^{®} ou Bluetooth^{®}.

Le procédé comprend aussi l'affichage d'une page d'accueil sur un écran du véhicule, ladite page d'accueil comportant une pluralité de profils et affichage d'une indication signalant un profil associé à l'utilisateur reconnu ou un profil dernièrement utilisé si l'étape de reconnaissance a échoué.

En réponse au démarrage du véhicule, le profil signalé sur l'écran d'accueil est chargé.

Un ou plusieurs paramètres associés au profil utilisateur sélectionné sont chargés pour par exemple effectuer le réglage d'un ou plusieurs équipements ou systèmes embarqués dans le véhicule tel que configurés dans le profil.

La sélection d'un profil d'utilisation associé à un objet connecté détecté ou à défaut du dernier profil utilisé, sans aucune action de l'utilisateur, permet le chargement automatique des paramètres associés au profil utilisateur, ce qui évite à l'utilisateur de sélectionner manuellement ou par une quelconque action le ou les profils utilisateurs qu'elle souhaite. L'affichage de la page d'accueil avec la pluralité de profils laisse toutefois la possibilité à l'utilisateur de modifier facilement le profil choisi par défaut si celui-ci n'est pas pertinent.

[Fig. 1] illustre schématiquement un objet connecté 11 relié par une liaison sans fil à un véhicule 10, selon un exemple de réalisation particulier et non limitatif de la présente invention.

Le véhicule 10 est un véhicule à moteur thermique, à moteur(s) électrique(s) ou encore un véhicule hybride avec un moteur thermique et un ou plusieurs moteurs électriques.

Le véhicule 10 est un véhicule adapté à une conduite en mode autonome ou en mode manuel.

Le véhicule 10 comprend avantageusement un dispositif, par exemple un calculateur, configuré pour communiquer avec l'objet connecté via une connexion sans fil. La connexion sans fil est par exemple une connexion Wifi^{®} (selon la norme IEEE 802.11), une connexion Bluetooth^{®}, une connexion ZigBee (selon la norme IEEE 802.15.4) ou encore une connexion de type NFC (de l'anglais « Near-Field Communication » ou en français CCP « Communication en Champ Proche »).

L'objet connecté 11 est par exemple porté par une personne souhaitant entrer dans le véhicule 10 ou utiliser le véhicule 10 pour effectuer un déplacement. L'objet connecté 11 correspond par exemple à un dispositif de télécommunication mobile, par exemple un téléphone intelligent ou « smartphone », une tablette, une montre connectée.

Dans une première opération, le véhicule reçoit un signal de réveil. Ce signal est par exemple associé au déverrouillage du véhicule 10. A cet effet, une clé échange des informations sous forme de signaux radiofréquences avec le système ADML (système d'Accès et Démarrage Mains Libres, ou PEPS en anglais pour « Passive Entry Passive Start)) du véhicule 10 pour verrouiller ou déverrouiller ce dernier à distance. Le déverrouillage est par exemple automatique lorsque le véhicule 10 détecte la présence de la clé à une distance déterminée du véhicule 10, par exemple quelques mètres.

Dans une deuxième opération, l'objet connecté 11 est détecté par le véhicule 10, par exemple lorsque la personne portant l'objet connecté pénètre dans l'habitacle du véhicule 10.

La détection est par exemple mise en œuvre lorsque l'objet connecté 11 et le véhicule 10 établissent une connexion sans fil, par exemple une connexion Bluetooth^{®}. A cet effet, le module de communication Bluetooth^{®} du véhicule 10 transmet une requête d'inquisition (de l'anglais « inquiry request ») demandant à l'objet connecté de transmettre son adresse de dispositif Bluetooth, dite BD_ADDR (de l'anglais « Bluetooth Device Address »), permettant ainsi au véhicule 10 d'identifier l'objet connecté 11.

Selon une variante de réalisation, l'objet connecté a été préalablement appairé au véhicule 10 (lors d'une connexion précédente) lors d'une phase de pairage durant laquelle une clé de chiffrement appelée code PIN (de l'anglais « Personal Information Number ») a été entrée dans l'objet connecté via une interface homme-machine, dite IHM.

Le module de connexion Bluetooth^{®} du véhicule 10 est par exemple activé automatiquement lors de l'ouverture d'une portière (par exemple la portière du conducteur) du véhicule 10.

Dans une troisième opération, le profil utilisateur associé à l'objet connecté 11 identifié dans l'opération précédente est sélectionné. Le profil utilisateur est par exemple sélectionné dans un ensemble de profil(s) utilisateur comprenant un ou plusieurs profils utilisateurs. Un ensemble de paramètres est avantageusement associé à chaque profil utilisateur, ces paramètres permettant le réglage automatique d'un ou plusieurs équipements ou systèmes embarqués dans le véhicule 10.

Chaque profil utilisateur d'au moins une partie des profils utilisateur de l'ensemble est associé à un objet connecté déterminé et unique. Ainsi, la détection d'un objet connecté permet de sélectionner automatiquement le profil utilisateur qui lui est associé. L'association des profils utilisateurs avec les objets connectés est par exemple stocké en mémoire d'un calculateur du système embarqué du véhicule 10 dans une table de correspondance, dite LUT (de l'anglais « Look-Up Table »), un profil utilisateur étant associé à un unique objet connecté dans cette table.

L'association entre un objet connecté déterminé et un profil utilisateur déterminé est par exemple mise en œuvre au préalable et une fois pour toute via une interface homme-machine du système embarqué du véhicule 10 (par exemple via un écran tactile relié au système embarqué), par exemple par la personne portant l'objet connecté.

La sélection du profil utilisateur associé à l'objet connecté 11 permet de récupérer tous les paramètres de réglage entrés par la personne portant l'objet connecté, cette personne ayant par exemple créé le profil utilisation via l'IHM du véhicule 10.

Dans une quatrième opération, une page d'accueil est affichée sur un écran du véhicule, ladite page d'accueil comportant une pluralité de profils. Avantageusement, l'écran est tactile ce qui facilite ainsi la sélection, le cas échéant, d'un profil.

Une indication signalant un profil associé à l'utilisateur reconnu est affichée. Si l'étape de reconnaissance a échoué (autrement dit, si aucun utilisateur n'est reconnu) alors c'est un profil dernièrement utilisé qui est signalé sur la page d'accueil.

Dans une cinquième opération, en réponse à un signal prédéterminé le ou les paramètres du profil utilisateur sélectionné à la deuxième opération sont chargés, c'est-à-dire récupérés d'une mémoire ou d'une zone de stockage du système embarqué.

Selon une variante de réalisation, ce ou ces paramètres sont récupérés d'une mémoire ou d'une zone de stockage distante, par exemple du « cloud » (ou « nuage » en français). Selon cette variante, une connexion sans fil est établie par le véhicule 10 pour se connecter au « cloud » et récupérer les paramètres du profil sélectionné, par exemple selon une connexion de type LTE (de l'anglais « Long-Term Evolution » ou en français « Evolution à long terme ») 4G ou 5G.

Le chargement des paramètres du profil sélectionné permet par exemple le réglage automatique d'un ou plusieurs équipements ou systèmes embarqués du véhicule 10, tels que par exemple :
- un ou plusieurs sièges du véhicule ;
- les rétroviseurs intérieurs et/ou extérieurs ;
- la climatisation ;
- le système multimédia ;
- l'expérience audio **;**
- le système de navigation ; et/ou
- l'éclairage ambiant de l'habitacle.

Selon une caractéristique de l'invention, le signal prédéterminé est choisi parmi : un signal de démarrage du véhicule, un signal d'activation d'une pédale d'accélération, un signal déblocage d'un frein de parking automatique ou de déblocage d'un frein à main manuel, ou un signal indiquant la fin d'un temporisateur.

De cette façon, le profil est chargé sans que le conducteur ait à faire une opération spécifique (par exemple toucher un écran tactile).

[Fig. 2] illustre schématiquement un dispositif 2 configuré pour sélectionner un profil utilisateur pour un véhicule, selon un exemple de réalisation particulier et non limitatif de la présente invention. Le dispositif 2 correspond par exemple à un dispositif embarqué dans le véhicule 10.

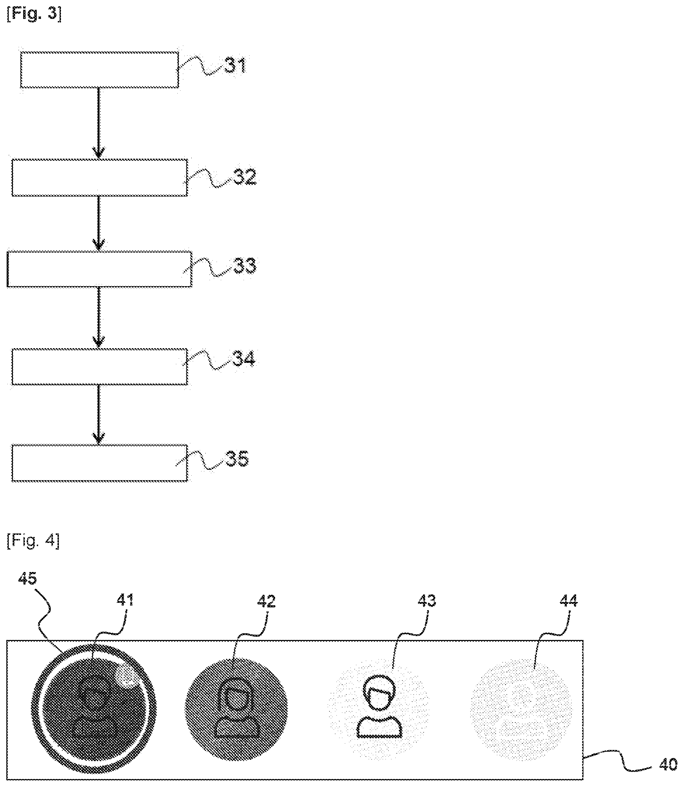

Le dispositif 2 est par exemple configuré pour la mise en oeuvre des opérations décrites en regard de la figure 1 et/ou des étapes du procédé décrit en regard de la figure 3. Des exemples d'un tel dispositif 2 comprennent, sans y être limités, un équipement électronique embarqué tel qu'un ordinateur de bord d'un véhicule, un calculateur électronique tel qu'une UCE, une unité de contrôle télématique TCU (de l'anglais « Telematic Control Unit »), un téléphone intelligent (de l'anglais « smartphone »), une tablette, un ordinateur portable. Les éléments du dispositif 2, individuellement ou en combinaison, peuvent être intégrés dans un unique circuit intégré, dans plusieurs circuits intégrés, et/ou dans des composants discrets. Le dispositif 2 peut être réalisé sous la forme de circuits électroniques ou de modules logiciels (ou informatiques) ou encore d'une combinaison de circuits électroniques et de modules logiciels. Selon différents modes de réalisation particuliers, le dispositif 2 est couplé en communication avec d'autres dispositifs ou systèmes similaires, par exemple par l'intermédiaire d'un bus de communication ou au travers de ports d'entrée / sortie dédiés.

Le dispositif 2 comprend un (ou plusieurs) processeur(s) 20 configurés pour exécuter des instructions pour la réalisation des étapes du procédé et/ou pour l'exécution des instructions du ou des logiciels embarqués dans le dispositif 2. Le processeur 20 peut inclure de la mémoire intégrée, une interface d'entrée/sortie, et différents circuits connus de l'homme du métier. Le dispositif 2 comprend en outre au moins une mémoire 21 correspondant par exemple une mémoire volatile et/ou non volatile et/ou comprend un dispositif de stockage mémoire qui peut comprendre de la mémoire volatile et/ou non volatile, telle que EEPROM, ROM, PROM, RAM, DRAM, SRAM, flash, disque magnétique ou optique.

Le code informatique du ou des logiciels embarqués comprenant les instructions à charger et exécuter par le processeur est par exemple stocké sur la première mémoire 21.

Selon un mode de réalisation particulier et non limitatif, le dispositif 2 comprend un bloc 22 d'éléments d'interface pour communiquer avec des dispositifs externes, par exemple un serveur distant ou le « cloud », d'autres dispositifs similaires au dispositif 2 et embarqués dans d'autres véhicules que celui embarquant le dispositif 2. Les éléments d'interface du bloc 22 comprennent une ou plusieurs des interfaces suivantes :
- interface radiofréquence RF, par exemple de type Bluetooth^{®} ou Wi-Fi^{®}, LTE (de l'anglais « Long-Term Evolution » ou en français « Evolution à long terme »), LTE-Advanced (ou en français LTE-avancé) ;
- interface USB (de l'anglais **«** Universal Serial Bus » ou « Bus Universel en Série » en français) ;
- interface HDMI (de l'anglais « High Definition Multimedia Interface », ou « Interface Multimedia Haute Definition » en français) ;
- interface LIN (de l'anglais « Local Interconnect Network », ou en français « Réseau interconnecté local »).

Des données sont par exemples chargées vers le dispositif 2 via l'interface du bloc 22 en utilisant un réseau Wi-Fi^{®} tel que selon IEEE 802.11, un réseau ITS G5 basé sur IEEE 802.11p ou un réseau mobile tel qu'un réseau 4G (ou LTE Advanced selon 3GPP release 10 - version 10) ou 5G, notamment un réseau LTE-V2X.

Selon un autre mode de réalisation particulier, le dispositif 2 comprend une interface de communication 23 qui permet d'établir une communication avec d'autres dispositifs, tels que par exemple le système de localisation de type GPS, le système de communication mobile (GSM, GPRS, Wi-Fi, Bluetooth, LTE, LTE-V, ITS G5)) ou les radars du système de radars via un canal de communication 230. L'interface de communication 23 correspond par exemple à un transmetteur configuré pour transmettre et recevoir des informations et/ou des données via le canal de communication 230. L'interface de communication 23 correspond par exemple à un réseau filaire de type CAN (de l'anglais « Controller Area Network » ou en français « Réseau de contrôleurs ») ou CAN FD (de l'anglais « Controller Area Network Flexible Data-Rate » ou en français « Réseau de contrôleurs à débit de données flexible »).

Selon un mode de réalisation particulier supplémentaire, le dispositif 2 peut fournir des signaux de sortie à un ou plusieurs dispositifs externes, tels qu'un écran d'affichage, un ou des haut-parleurs et/ou d'autres périphériques via respectivement des interfaces de sortie non représentées.

[Fig. 3] illustre un organigramme des différentes étapes d'un procédé de sélection d'un profil utilisateur pour véhicule, selon un exemple de réalisation particulier et non limitatif de la présente invention. Le procédé est avantageusement mis en oeuvre dans le véhicule 10 et/ou dans le dispositif 2.

Dans une première étape 31, en réponse à un signal de réveil, un utilisateur est reconnu. Dans une deuxième étape 32, un profil associé à cet utilisateur est sélectionné.

Dans une troisième étape 33, une page d'accueil est affichée sur un écran du véhicule, ladite page d'accueil comportant une pluralité de profils.

Dans une quatrième étape 34, une indication signalant un profil associé à l'utilisateur reconnu ou un profil dernièrement utilisé si l'étape de reconnaissance a échoué, est affiché.

Dans une quatrième étape 35, en réponse à un signal prédéterminé, le profil signalé sur l'écran d'accueil est chargé.

[Fig. 4] illustre un exemple de page d'accueil 40 comportant une pluralité de profils 41, 42, 43, 44 symbolisés par des ronds. Un 41 des profils est présélectionné. Il est signalé par une indication graphique. Il s'agit ici d'un cercle épais 45 entourant le profil.

Bien entendu, l'invention ne se limite pas aux modes de réalisation décrits ci-avant mais s'étend à un procédé de contrôle d'un système de réglage d'un équipement de véhicule, et au dispositif configuré pour la mise en oeuvre d'un tel procédé.

L'invention concerne également un système comprenant l'objet connecté 11 et le véhicule 10, le dispositif mobile 11 étant relié au véhicule 10 via une ou plusieurs connexions sans fil.

L'invention concerne également un véhicule comprenant le dispositif 2.

## Revendications

1. Procédé de sélection d'un profil utilisateur pour véhicule (10), ledit procédé étant mis en œuvre par ledit véhicule (10), ledit procédé comprenant les étapes de :
En réponse à un signal de réveil,
- Reconnaissance (31) d'un utilisateur et sélection (32) d'un profil associé,
- affichage (33) d'une page d'accueil sur un écran du véhicule, ladite page d'accueil comportant une pluralité de profils,
- affichage (34) d'une indication signalant un profil associé à l'utilisateur reconnu ou un profil dernièrement utilisé si l'étape de reconnaissance a échoué,
en réponse à un signal prédéterminé, chargement (35) du profil signalé sur l'écran d'accueil,
le signal prédéterminé étant choisi parmi : un signal de démarrage du véhicule, un signal d'activation d'une pédale d'accélération, un signal déblocage d'un frein de parking automatique ou de déblocage d'un frein à main manuel, ou un signal indiquant la fin d'un temporisateur.

2. Procédé selon l'une des revendications précédentes dans lequel l'étape de reconnaissance (31) d'un utilisateur comprend la détection d'un objet connecté (11).

3. Procédé selon la revendication précédente, pour lequel ladite détection de l'objet connecté (11) comprend une connexion dudit objet connecté audit véhicule (10) via une connexion sans fil.

4. Procédé selon la revendication précédente, pour lequel ladite connexion sans fil est une connexion Bluetooth.

5. Procédé selon l'une des revendications 2 à 4, comprenant en outre une étape d'association dudit objet connecté (11) audit profil utilisateur.

6. Procédé selon l'une des revendications précédentes, comprenant en outre une étape de réglage d'au moins un équipement dudit véhicule (10) en fonction dudit profil.

7. Dispositif (2) de sélection d'un profil utilisateur pour véhicule, ledit dispositif (2) comprenant une mémoire (21) et au moins un processeur (20) configuré pour la mise en œuvre des étapes du procédé selon l'une quelconque des revendications 1 à 6.

8. Véhicule (10) comprenant le dispositif (2) selon la revendication 7.

9. Produit programme d'ordinateur comportant des instructions adaptées pour l'exécution des étapes du procédé selon l'une des revendications 1 à 6, lorsque le programme d'ordinateur est exécuté par au moins un processeur.

## Patentansprüche

1. Verfahren zur Auswahl eines Benutzerprofils für ein Fahrzeug (10), wobei das Verfahren durch das Fahrzeug (10) implementiert wird, wobei das Verfahren die folgenden Schritte umfasst:
als Reaktion auf ein Wecksignal
- Erkennung (31) eines Benutzers und Auswahl (32) eines zugeordneten Profils,
- Anzeige (33) einer Startseite auf einem Bildschirm des Fahrzeugs, wobei die Startseite eine Vielzahl von Profilen umfasst,
- Anzeige (34) eines Hinweises auf ein Profil, das dem erkannten Benutzer zugeordnet ist, oder auf ein Profil, das zuletzt verwendet wurde, wenn der Erkennungsschritt fehlgeschlagen ist,
als Reaktion auf ein vorgegebenes Signal das Laden (35) des auf dem Willkommensbildschirm angezeigten Profils, wobei das vorgegebene Signal ausgewählt ist aus: einem Fahrzeugstartsignal, einem Signal zur Betätigung eines Beschleunigungspedals, einem Signal zur Freigabe einer automatischen Feststellbremse oder einer Handbremse oder einem Signal zur Anzeige des Endes eines Zeitgebers.

2. Verfahren nach einem der vorhergehenden Ansprüche, bei dem der Schritt des Erkennens (31) eines Benutzers das Erfassen eines verbundenen Objekts (11) umfasst.

3. Verfahren nach dem vorhergehenden Anspruch, wobei das Erfassen des verbundenen Objekts (11) das Verbinden des verbundenen Objekts mit dem Fahrzeug (10) über eine drahtlose Verbindung umfasst.

4. Verfahren nach dem vorhergehenden Anspruch, wobei die drahtlose Verbindung eine Bluetooth-Verbindung ist.

5. Verfahren nach einem der Ansprüche 2 bis 4, das des Weiteren einen Schritt des Zuordnens des verbundenen Objekts (11) zu dem Benutzerprofil umfasst.

6. Verfahren nach einem der vorhergehenden Ansprüche, das des Weiteren einen Schritt des Einstellens mindestens einer Ausrüstung des Fahrzeugs (10) in Abhängigkeit von dem Profil umfasst.

7. Vorrichtung (2) zur Auswahl eines Benutzerprofils für ein Fahrzeug, wobei die Vorrichtung (2) einen Speicher (21) und mindestens einen Prozessor (20) umfasst, der zur Durchführung der Schritte des Verfahrens nach einem der Ansprüche 1 bis 6 konfiguriert ist.

8. Fahrzeug (10) mit der Vorrichtung (2) nach Anspruch 7.

9. Computerprogrammprodukt mit Anweisungen, die zur Ausführung der Schritte des Verfahrens nach einem der Ansprüche 1 bis 6 geeignet sind, wenn das Computerprogramm von mindestens einem Prozessor ausgeführt wird.

## Claims

1. Method for selecting a user profile for a vehicle (10), said method being implemented by said vehicle (10), said method comprising the steps of:
In response to an alarm signal,
- recognition (31) of a user and selection (32) of an associated profile,
- display (33) of a home page on a screen of the vehicle, said home page comprising a plurality of profiles,
- display (34) of an indication indicating a profile associated with the recognised user or a profile recently used if the recognition step has failed,
in response to a predetermined signal, load (35) of the profile indicated on the home screen, the predetermined signal being chosen: a start signal of the vehicle, an activation signal of an acceleration pedal, a signal for unlocking an automatic parking brake or for unlocking a manual hand brake, or a signal indicating the termination of a timer.

2. Method according to previous claim 1, in which the step of recognising (31) a user comprises detecting a connected object (11).

3. Method according to previous claim 1, wherein said detection of the connected object (11) comprises a connection of said connected object to said vehicle (10) via a wireless connection.

4. Method according to previous claim 1, wherein said wireless connection is a Bluetooth connection.

5. Method according to one of claims 2 to 4, comprising a step of associating said connected object (11)with said user profile.

6. Method according to one of the previous claims, comprising a step of setup of at least one piece of equipment of said vehicle (10) as a function of said profile.

7. Device (2) for selecting a user profile for a vehicle, said device (2) comprising a memory (21) and at least one processor (20) configured for implementing the steps of the method according to any one of claims 1 to 6.

8. Vehicle (10) comprising the device (2) according to claim 7.

9. Computer plan product comprising instructions adapted for the execution of the steps of the method according to one of claims 1 to 6, when the computer plan is executed by at least one processor.
